# EUROPÄISCHE PATENTANMELDUNG

(11) **EP 1 462 201 A1**
(43) Veröffentlichungstag der Anmeldung: **29.09.2004**
(21) Anmeldenummer: 03029099.3
(22) Anmeldetag: 18.12.2003
(51) Int. Cl.: B23D 53/12, A22B 5/20

(54) **Bandsäge**

(30) Priorität: 24.03.2003 DE 10313768
(71) Anmelder: SCHMID & WEZEL GmbH & Co., D-75429 Maulbronn (DE)
(72) Erfinder: Lay, Norbert, Dr., 71149 Bondorf (DE)
(74) Vertreter: Dreiss, Uwe, Prof. Dr. jur. Dipl.-Ing. M.Sc.

(57) **Zusammenfassung**

Beschrieben wird eine Bandsäge zum Zerteilen von Schlachttieren, die mittels eines Aufhängebügels (10) an einer Aufhänghängevorrichtung einhängbar ist, bei der das untere Ende des Bügels (10) an dem Gehäuse (4, 5, 6) mittels Einrichtungen angelenkt ist, die eine Drehung des Gehäuses (4, 5, 6) um mindestens zwei Drehachsen (B, C) ermöglichen, von denen eine Drehachse (b) in einer vertikalen geräteparallelen Ebene (E) oberhalb des Schwerpunktes liegt, und von denen die andere (C) in einer senkrecht zu dieser Ebene (E) verlaufenden vertikalen Ebene ebenfalls oberhalb des Schwerpunktes (S) liegt.

## Beschreibung

Die Erfindung betrifft eine Bandsäge der im Oberbegriff des Patentanspruches 1 genannten Art. Sie dient zum Beispiel zur Zerteilung von Schlachttieren oder dergleichen.

Aufgabe der Erfindung ist es, die Handhabbarkeit einer solchen Bandsäge bei der Bedienung hinsichtlich des dazu erforderlichen Kraftaufwandes zu vereinfachen.

Die Lösung dieser Aufgabe erfolgt mit den im Kennzeichen des Patentanspruches 1 angegebenen Merkmalen. Die Erfindung betrifft ferner verschiedene vorteilhafte Weiterbildungen.

Ein Ausführungsbeispiel der Erfindung und ihrer vorteilhaften Weiterbildungen ist in der folgenden Beschreibung unter Bezugnahme auf die beigefügten Zeichnungen dargestellt. Es stellen dar:
- Figur 1: eine perspektivische Ansicht der Bandsäge;
- Figur 2: einen vertikalen Schnitt durch die Bandsäge nach Figur 1 in Richtung der Pfeile II.

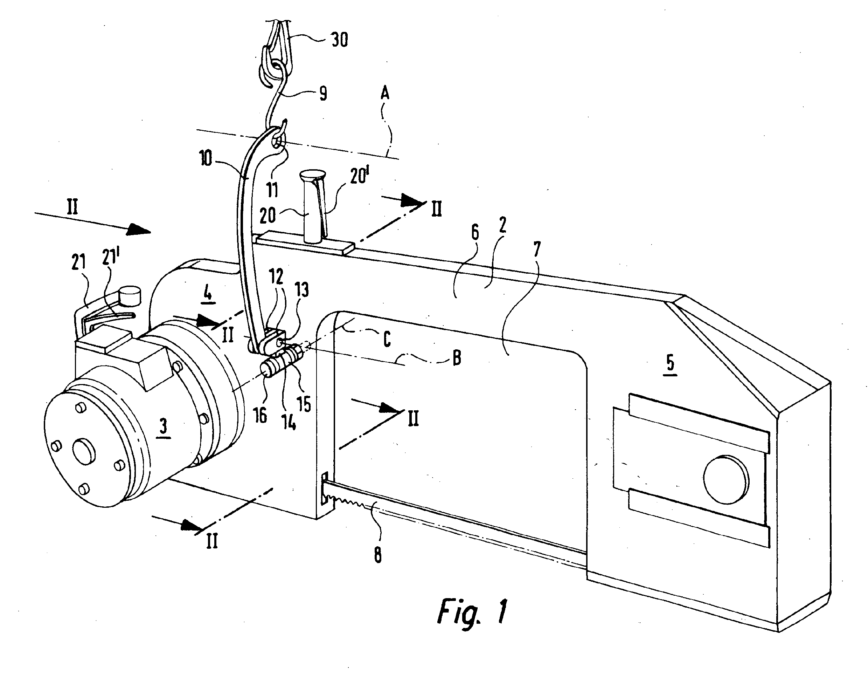

Figur 1 zeigt eine Bandsäge, wie sie in Schlachtbetrieben zum Zersägen von geschlachteten Tieren in Hälften verwendet wird. Sie weist ein aus zusammengeschweißten Stahlplatten gebildetes Gehäuse 2 auf, das zwischen einem ersten den Antriebsmotor 3 aufweisenden und als Kasten ausgebildeten Gehäuseteil 4, einem zweiten Gehäuseteil 5, in dem die Bandführung (nicht gezeigt) aufgenommen ist, und einen dritten Gehäuseteil 6, durch den die Gehäuseteile 4 und 5 miteinander verbunden sind, eine nach unten offene rechteckige Ausnehmung 7 aufweist. Zwischen den unteren Bereichen der Gehäuseteile 4 und 5 läuft das Sägeband 8 frei. Es läuft oben in dem als Kasten ausgebildeten Gehäuseteil 6 wieder zurück. Die Aufhängung erfolgt üblicherweise an einem Haken 9 einer Aufhängevorrichtung 30 am Arbeitsplatz. Die Aufhängevorrichtung kann Teil einer an der Decke eines Raumes verfahrbaren Laufkatze, eines Flaschenzugs, oder dergleichen sein. Soweit die Bandsäge bis jetzt beschrieben worden ist, ist sie bekannt. Details brauchen daher nicht weiter erläutert und dargestellt zu werden.

Die Erfindung befasst sich aber mit der Aufhängung der Bandsäge an dem Haken 9. Zu diesem Zweck ist ein geschwungener, C-förmig ausgebildeter Bügel 10 vorgesehen, der an seinem oberen Ende eine Öffnung 11 aufweist, die an dem Haken 9 eingehängt ist. Sie lässt ein Drehen des Bügels 10 um die Drehachse A zu.

Der Bügel 10 weist an seinem unteren Ende zwei mit ihm verschweißte und im wesentlichen waagerecht verlaufende Endteile 12 auf. Diese sind beide mit miteinander fluchtenden Öffnungen versehen. In diesen Öffnungen ist ein Bolzen 13 um die Drehachse B drehbar gelagert, und zwar im wesentlichen derart, dass die Drehachse B des Bolzens 13 in derselben vertikalen und parallel zur Haupterstreckungsrichtung der Bandsäge verlaufenden vertikalen Ebene E liegt, also in anderen Worten senkrecht unterhalb der Öffnung 11. Mit dem Bolzen 13 ist zwischen den beiden Endteilen 12 ein Verbindungsstück 14 fest verbunden. Dieses ist seinerseits auf seiner Unterseite mit einer Drehhülse 15 fest verbunden.

Die Drehhülse 15 ist auf einem weiteren Bolzen 16 um die Drehachse C drehbar gelagert. Dieser Bolzen 16 ist in eine Bohrung 31 im Gehäuseteil 4 eingeschraubt und durch eine Mutter 17 gesichert, wobei der Abstand der Drehhülse 15 zur Wand des Gehäuseteils 4 durch eine geeignete Zahl von Distanzringen 18 bestimmt wird.

Daraus folgt, dass die Bandsäge, wie durch die gestrichelten Linien angedeutet, sowohl um die parallelen Drehachsen A und B als auch um die Drehachse C, die senkrecht zu den Drehachsen A und B verläuft, verschwenkbar ist.

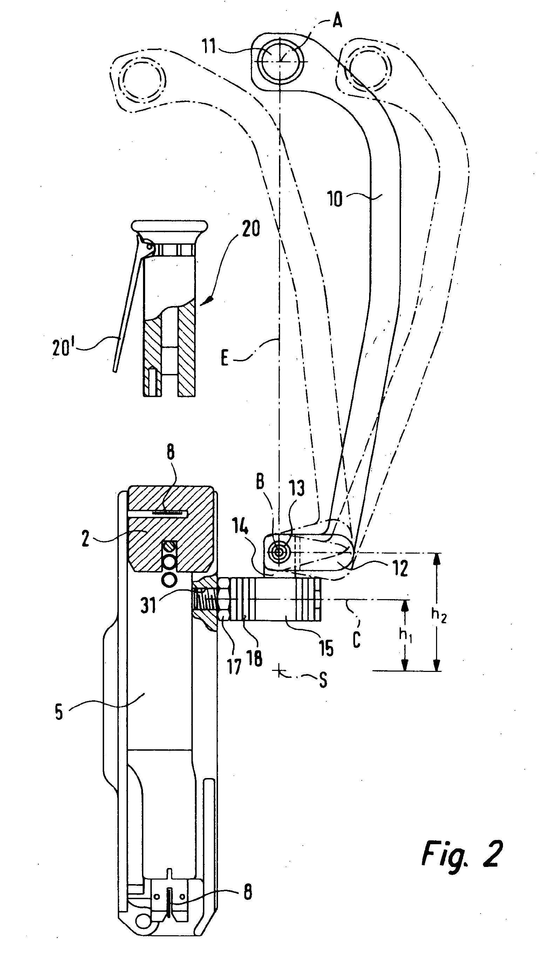

In Figur 2 ist der Schwerpunkt (Massenmittelpunkt) S der Bandsäge eingezeichnet. Wegen des Masseanteils des Antriebsmotors 3 außerhalb des Gehäuseteiles 4 befindet sich S außerhalb des Gehäuseteils 4. Der Schwerpunkt ist der Punkt, in dem sich die gesamte Vorrichtung in jeder Lage im Gleichgewicht befindet. Der Schwerpunkt ist auch der Punkt, an dem das gesamte Gewicht der Vorrichtung angreift, wenn man die Vorrichtung um eine der Drehachsen A, B, C dreht, das heißt - zum Beispiel bei der Handhabung, aus der Gleichgewichtslage herausdreht.

Die Lage der Drehachsen A und B ist nun so gewählt (zum Beispiel durch entsprechende Anordnung von Distanzringen 14), dass der Schwerpunkt S auch in der Ebene E liegt, das heißt auch direkt unterhalb der punktförmigen Auflage des Inneren der Öffnung 11 am Haken 9. Ferner ist auch die vertikale Ebene, in der die Drehachse S liegt, so bestimmt, dass sie die Ebene der Zeichnung Figur 2 ist.

Die Drehachse C liegt um einen Abstand h₁ höher als S. Die Drehachse B liegt um den Abstand h₂ höher als S. Beide Beträge sind vom Maschinenaufbau, insbesondere von der Masseverteilung, abhängig. h₁ liegt zum Beispiel zwischen 40 und 100 mm, h₂ zwischen 60 und 100 mm. Die Werte sind so gewählt, dass sich in besonders handhabungsangepasster Weise folgendes ergibt: Wird die Bandsäge bei der Handhabung aus der beschriebenen und gezeigten Gleichgewichtslage - die Drehachsen A, B, C gehen durch S - herausbewegt, so bewirkt das Gewicht eine Drehung um eine oder mehrere der Drehachsen A, B, C. Da sie oberhalb S liegen, bewirkt das Gewicht der Vorrichtung, das an S angreift, ein Zurückschwenken der Vorrichtung in die Gleichgewichtslage. Wenn die Abstände h₁ und h2 nun andererseits nicht zu groß sind, so ist ein Herausbewegen aus der Gleichgewichtslage mit relativ geringem Aufwand durch die Bedienungsperson möglich.

Insgesamt wird also durch die erfindungsgemäße Bandsäge eine mit minimalem Kraftaufwand betätigbare und stets wieder von selbst in eine Gleichgewichtslage zurückfindende Aufhängung geschaffen. Dies gilt für alle Richtungen der Auslenkung.

Aus Figur 1 sind auch die beiden Handgriffe 20, 21 ersichtlich, an denen eine Bedienungsperson die Säge anfasst. Dabei müssen die Sicherheitsbügel 20', 21' durch Anfassen gedrückt sein, um über entsprechende Ventile den Antrieb des Sägebandes 8 durch den Antriebsmotor 3 freizugeben. Das verhindert, dass die Bandsäge betätigt werden kann, ohne dass beide Hände der Bedienungsperson durch Angreifen an diesen Griffen 20, 21 festgelegt sind, Verletzungen zu vermeiden.

## Patentansprüche

1. Bandsäge, vorzugsweise zum Zerteilen von Schlachttieren, mit einem Gehäuse (2), in dem ein von einem Antriebsmotor (3) angetriebenes Sägeband (8) umläuft, bei dem das Gehäuse (2) zwei Gehäuseteile (4, 5) aufweist, die über ein drittes Gehäuseteil (6) miteinander verbunden derart sind, dass sich zwischen ihnen eine nach unten offene Ausnehmung (7) ergibt, an deren Unterseite das Sägeband (8) frei läuft, und wobei die Bandsäge mit einem Aufhängebügel (10) an einer Aufhängevorrichtung einhängbar ist, **dadurch gekennzeichnet, dass** das untere Ende des Bügels (10) an dem Gehäuse (4, 5, 6) mittels Einrichtungen angelenkt ist, die eine Drehung des Gehäuses (4, 5, 6) um mindestens zwei Drehachsen (B, C) ermöglichen, von denen eine Drehachse (B) in einer vertikalen geräteparallelen Ebene (E) oberhalb des Schwerpunktes liegt, und von denen die andere (C) in einer senkrecht zu dieser Ebene (E) verlaufenden vertikalen Ebene ebenfalls oberhalb des Schwerpunktes (S) liegt, so dass der Schwerpunkt (S) in beiden Ebenen liegt.

2. Bandsäge nach Anspruch 1, **dadurch gekennzeichnet, dass** die geräteparallel angeordnete Drehachse (B) in einem Abstand (h₁) von 40 bis 100 mm oberhalb des Schwerpunktes (S) liegt.

3. Bandsäge nach Anspruch 1 oder 2, **dadurch gekennzeichnet, dass** die andere Drehachse (C), die senkrecht zur geräteparallelen Ebene des Gerätes (E) angeordnet ist, 40 bis 100 mm oberhalb des Schwerpunktes (S) liegt.

4. Bandsäge nach einem der Ansprüche 1 bis 3, **dadurch gekennzeichnet, dass** die Aufhängung durch einen Bügel (10) erfolgt, der an seinem oberen Ende eine zum Aufhängen geeignete Öffnung (11) aufweist und in dessen unterem Ende verschwenkbar ein Bolzen (13) befestigt ist, der an der Bandsäge angeordnet ist und eine Drehachse (B) verwirklicht.

5. Bandsäge nach Anspruch 4, **dadurch gekennzeichnet, dass** die durch den Bolzen (13) am Bügel verwirklichte Drehachse (B) senkrecht zur Bandsäge gestellt ist.

6. Bandsäge nach einem der Ansprüche 4 oder 5, **dadurch gekennzeichnet, dass** der Bolzen (13) mit einer Drehhülse (15) verbunden ist, in der ein mit der Bandsäge (8) verbundener weiterer Bolzen (16) schwenkbar angebracht ist, der eine weitere Drehachse (C) verwirklicht.

7. Bandsäge nach Anspruch 6, **dadurch gekennzeichnet, dass** die durch den weiteren Bolzen (16) verwirklichte Drehachse (C) senkrecht zur Bandsäge verläuft.
